(19)

Europäisches
Patentamt
European
Patent Office
Office européen
des brevets

(11) **EP 4 607 302 A1**

(12) **EUROPEAN PATENT APPLICATION**

(43) Date of publication:
**27.08.2025 Bulletin 2025/35**

(21) Application number: **24305289.1**

(22) Date of filing: **22.02.2024**

(51) International Patent Classification (IPC):
*G05B 19/414* (2006.01)      *G05B 19/418* (2006.01)

(52) Cooperative Patent Classification (CPC):
**G05B 19/414; G05B 19/4189**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SCHNEIDER ELECTRIC INDUSTRIES SAS**
**92500 Rueil-Malmaison (FR)**

(72) Inventors:
• **Diehm, Sebastian**
  **97907 Hasloch (DE)**
• **Furth, Sebastian**
  **97950 Grossrinderfeld (DE)**
• **Heid, Jürgen**
  **97237 Altertheim (DE)**
• **Li, Yiman**
  **97080 Würzburg (DE)**

(74) Representative: **Manitz Finsterwald**
**Patent- und Rechtsanwaltspartnerschaft mbB**
**Martin-Greif-Straße 1**
**80336 München (DE)**

(54) **METHODS AND SYSTEMS FOR DETERMINING MOTION PROFILE DATA FOR A TRANSPORT SYSTEM**

(57)      A method for determining motion profile data for a transport system is provided. The method comprises: determining first motion profile data based on a machine learning method, wherein the first motion profile data comprises information on a first segment of transport; and determining second motion profile data based on a movement of a further transport system, wherein the second motion profile data comprises information on a second segment of transport.

100

Fig. 1

Processed by Luminess, 75001 PARIS (FR)

EP 4 607 302 A1

**Description**

The present disclosure relates to methods and system for determining motion profile data for a transport system.

Transport systems may be used to transport or move items from one place to another, for example during manufacturing or packaging. Furthermore, the item may be manipulated, for example sealed or printed during the transport.

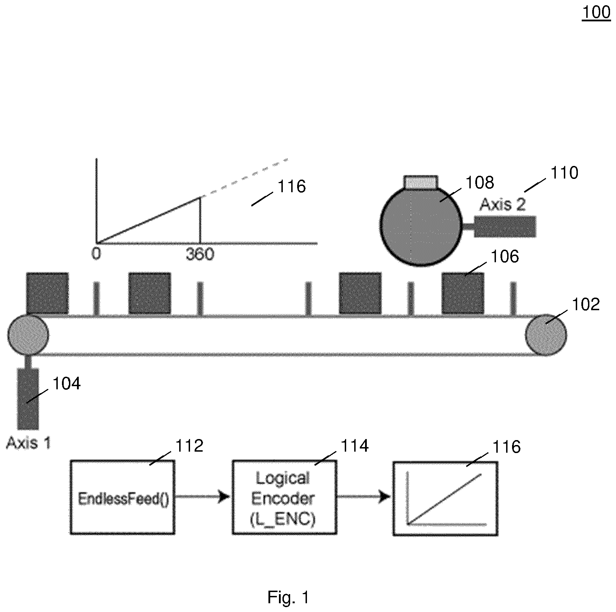

Figure 1 shows an illustration of an exemplary transport system arrangement 100, where a transport system 102 with a first axis 104 transports a plurality of items 106, for example on a belt. A further transport system 108, with a second axis 110, interacts with the items 106 transported by the first transport system 102. In the example illustrated in Figure 1, the further transport system 108 is a printing system, which transports a print (for example ink or color) to the items 106.

Figure 1 demonstrates the machine-subsystem for printing application as well as the logical connection of the motion system. The physical or virtual master (e.g. representing the transport belt 102 and respectively the Servo-Drive/Motor subsystem 104 operating it) is running in an endless feed operation with continuous transport of the products/goods/materials.

Illustratively, a logical software object (named logical encoder 114) may be used to connect the motion master (leader) with the motion slave (follower) axis 102 and may be operated to transform the master-endless movement 112 to an input appropriate to the slave cyclic movement in the slaves coordinate system 116.

The motion slave (following axis 102) may subsequently be running its local movement cyclically with an electronic cam in the coordinate system 116 given in the example from 0 to 360 units (wherein user units may for example represent rotation or mm or any other application wide consistent unit definition). This may be operated in a way to synchronously move the printing unit 108 to the products/goods 106.

DE 10 2021/128 280 A1 discloses a container treatment system for treating containers. The container treatment system has a filling device for filling the containers and a planar drive system having a base element and a plurality of transport movement devices. The base element is connected to the filling device. The base element is designed to drain liquid that has leaked onto the top of the base element to a liquid collection zone of the container treatment system. Excessive contamination of the base element and thus of the container treatment system can be prevented by allowing leaked liquid to flow automatically to the liquid collection zone.

WO 2019/238 277 A1 discloses a method for identifying a load and/or wear of a transport element of a transport system with a long-stator linear motor, having the steps of: exciting a dynamic system consisting of the long-stator linear motor and the transport element according to at least one excitation pattern; capturing the movement profile of the transport element on account of the at least one excitation pattern; and capturing a temporal profile of a load current and/or of a load voltage of the long-stator linear motor according to the at least one excitation pattern by means of an integrated measuring apparatus of the long-stator linear motor; wherein a loading condition of the transport element is determined on the basis of the captured movement profile and the captured temporal profile of the load current and/or of the load voltage.

J. Wang et al., "Multi-Agent Reinforcement Learning for Active Voltage Control on Power Distribution Networks", arXiv:2110.14300, is related to power networks, in particular to active voltage control in voltage grids, and formulates the active voltage control problem in the framework of Dec-POMDP and establishes an open-source environment.

The known methods lack a way to efficiently and reliable determine motion profiles also in cases where analytical solutions are not available.

It is an object of the invention to efficiently and reliably provide methods and system for determining motion profile data for a transport system.

These objects are accomplished with the features of claim 1 and with the features of claims, 12, 13, and 14.

A method for determining motion profile data for a transport system (for example a multicarrier system) has the features of claim 1. The method for determining motion profile data for a transport system comprises: determining first motion profile data based on a machine learning method, wherein the first motion profile data comprises information on a first segment of transport; and determining second motion profile data based on a movement of a further transport system, wherein the second motion profile data comprises information on a second segment of transport.

In other words, an overall motion profile may be determined, including one portion which is restricted based on a movement of another transport system, and one portion is less restricted and the motion profile for the less restricted portion is determined using a machine learning method.

The machine learning method may include an artificial neural network. The machine learning method may include a reinforcement learning method.

The second segment may be provided before the first segment, or the second segment may be provided after the first segment. According to various embodiments, more than one first segment and/ or more than one second segment may be provided.

The second motion profile data may be determined so that the transport system moves in line with the further transport system (for example during the second segment of transport). Thus, efficient handling of any items moved by the transport system and subject to any further processing using the further transport system may be provided.

The second motion profile data is determined so that a handover of an item carried by the further transport system is provided to the transport system (for example so that the second segment is a segment of handover from the transport system to the further transport system). This may provide seamless handover of the item from the transport system to the further transport system or vice versa.

The first motion profile data and/ or the second motion profile data may be defined using a spline. This may allow efficient representation of the first and/ or second motion profile data and the motions represented by the first and/ or second motion profile may be smooth.

The first motion profile data and/ or the second motion profile data may be defined using an array of positions. This may allow efficient representation of the first and/ or second motion profile data.

The first motion profile data is determined based on minimizing a time. For example, the first motion profile data may represent a motion which provides a minimum time to a target.

The first motion profile data may be determined based on minimizing an energy consumption. For example, the first motion profile data may represent a motion which provides an energy optimized movement.

The first motion profile data may be determined based on minimizing slosh of a liquid provided in a container to be transported by the transport system. For example, the first motion profile data may represent a motion with reduced slosh or even without slosh of a liquid provided in a container to be moved by the transport system.

The first motion profile data may provide at least one of an acceleration, a deceleration, or a return to a pre-determined position.

The further transport system may be configured to move a tool to manipulate an item carried by the transport system. The tool may include or may be a printer, and/ or a knife, and/ or a tool to add a further item to the item. For example, the item may be a beverage can body, and the further item may be a can lid.

A non-transitory computer-readable medium has the features of claim 12. The non-transitory computer-readable medium may comprise instructions which, when executed by a computing system, make the computing system carry out one or more steps of one of the methods as described herein.

A data processing apparatus has the features of claim 13. The data processing apparatus may be configured to carry out one or more steps of one of the methods as described herein. The data processing apparatus may also be referred to as control unit.

A transport system has the features of claim 14. The transport system may comprise a control unit (for example the control unit of claim 13) configured to determine a motion profile data for the control system based on one of the methods as described herein.

The transport may be configured as a multicarrier system. The multicarrier system may include a plurality of linear motors which are provided in a series, and a guidance rail, wherein a transport element may be moved along the guidance rail.

In the following, embodiments of the invention will be explained with reference to the drawings, in which

Figure 1   shows a transport system arrangement according to various embodiments;
Figure 2   shows an illustration of reinforcement learning according to various embodiments;
Figure 3   shows an illustration of reinforcement learning method according to various embodiments;
Figure 4   shows an illustration of a control concept according to various embodiments;
Figure 5   shows an illustration of a segmented cam according to various embodiments;;
Figure 6   shows an infeed system according to various embodiments;
Figure 7   shows an illustration of the reinforcement learning system according to various embodiments;
Figure 8   shows a flow diagram illustrating a method for determining motion profile data for a transport system according to various embodiments; and
Figure 9   shows a computer system according to various embodiments.

According to various embodiments, AI (artificial intelligence) improved general motion control (GMC) may be provided, for example for slosh reduction and multi-target-parameter optimization.

According to various embodiments, synchronous motion may be defined (or determined) to optimize movement in multi-target environments, for different formats, and in analytically not describable situations. For example, a container with liquid may be moved from position A to position B in a machine (in other words: using a transport system) without spilling the liquid.

Constraints may define or restrict the movement. For example, synchronous position movement for a specific area in the movement range may be required. It may be desired to achieve the movement in a minimum time to target, or to achieve an energy optimized movement.

A container may be moved. The shape of the container may positively or negatively influence the risk of spilling. The container may include a liquid. Viscosity of liquids may vary depending on compound (ingredients/recipe) of the liquid, and/ or temperature (which may for example depend on the time of the day and/or processing ambient), and/ or air pressure (which may for example depend on the ambient and/or geo location of the filling machine).

The liquid may include or may be sodium chloride (for example as an aqueous solution, for example with a mass percentage between 1% and 10%, for example 1%, or 2%, or 3%, or 5%, or 10%), and/ or calcium chloride (for example as an aqueous solution, for example with a mass percentage between 1% and 10%, for example 1%, or 2%, or 3%, or 5%, or 10%), and/or potassium iodide (for example as an aqueous solution, for example with a mass percentage between 1% and 10%, for example 1%, or 2%, or 3%, or 5%, or 10%), and/ or cesium chloride (for example as an aqueous solution, for example with a mass percentage between 1% and 10%, for example 1%, or 2%, or 3%, or 5%, or 10%), and/or sucrose (for example as an aqueous solution, for example with a mass percentage between 1% and 10%, for example 1%, or 2%, or 3%, or 5%, or 10%), and/ or whole milk, and/ or olive oil, and/ or canola oil, and/ or sunflower oil, and/ or honey, and/ or ketchup, and/ or peanut butter, and/ or pitch, and/ or beer, and/ or soda water, and/ or sparkling water, and/ or lemonade.

According to various embodiments, a machine learning based, for example AI-generated, "motion profile" (which may also be referred to as "motion profile data" or as "cam") may be provided that allows synchronous movement (and optimized movement) in multi-target environments, for different formats, and in analytically not describable situations.

The motion profile may be segmented into a plurality of segments. Accordingly, the transport for which the motion profile is provided may be divided into a plurality of segments of transport. The segments of the motion profile may include an acceleration segment, and/or a continuous movement segment, and/or a deceleration/return segment.

Fixed parts of the motion profile may include a segment with synchronous movement with other mechanics (for example synchronous movement of the transport system with the further transport system). Inputs for the training/execution engine may include a constant velocity and/ or pre-determined segment limits.

Variable parts of the motion profile may include an acceleration segment and/or a deceleration segment. Inputs for determining the variable parts may include the pre-defined segment limits. Outputs of the method for determining the motion profile data (in other words: outputs of the execution engine) may be provided separately for the acceleration segment, the synchronous segments, and the deceleration segment. Each segment may include data including an array (in other words: list) of position-points which may be interpolated in the motion kernel (for example with a polynomial of fifth degree, which may be referred to as Poly5).

For example, an anti-slosh movement (or motion) may be determined, wherein the method may provide an AI defined motion profile that moves a container without spilling a liquid in the container, considering different container shapes, fill levels, and/ or liquid viscosities.

"AI defined motion profile" may be understood as a motion profile which is provided by AI, for example by a machine learning method which has been trained.

The inputs during training may include liquid parameters (for example viscosity and/or mass), container parameters (for example height, and/or fill height, and/or mass, and/ or geometry of the container), ambient conditions (for example temperature and/or air pressure), segment border conditions for the segments of the profile that are to be determined by AI (and which may be referred to as AI segments; for example start and end conditions, for example x position at a start of the segment and/or velocity at a start of the segment and/or acceleration at a start of the segment, and/or jerk at a start of the segment and/or x position at an end of the segment and/or velocity at an end of the segment and/or acceleration at an end of the segment, and/or jerk at an end of the segment) and/or segment border conditions for a constant-vel segment (wherein for start and end the following values are provided: x, pos, vel, acc, jerk), and/or a slosh level measured by a sensor unit.

The motion definition may be done in an "pos over pos" diagram (instead of pos over time). This means the y coordinate is a representation of the slave's position and the x coordinate is a representation of the master's position. By doing so and not "pos over time" the velocity of the master axis can be increased while all the positions of the slave axis are calculated and operating still synchronously.

The output during operation (in other words, after training, and when using the machine learning method in actual operation; this phase may also be referred to as inference phase) may include a motion profile for AI segments (for example including interpolated position values), for example including segment border conditions (for example x, and/or position, and/or velocity, and/or acceleration, and/or jerk).

According to various embodiments, the training may include several steps.

In a first step of training, real measurement or data from a simulation model may be used. For example, data may be acquired using a slosh wave measurement system, for example an ultrasonic or laser-distance based measurement system. In n training runs with different liquids and with different defined (or arbitrary) movement, the real damping may be measured.

In a second step of training, a data driven simulation model or any other simulation model or any other simulation may be used. For example, a simulator may be used to simulate dynamical behavior of liquids.

In a third step of training, the actual reinforcement learning may be carried out. An (artificial) neural network (which may be used for control after training) may be trained, for example by trial and error or by using an optimization method, based on training data. The observation for training may include or may be the level of slosh on different movements. The actions for the reinforcement learning method may include or may be providing different motion profiles.

The reward function may include or may be related to minimizing the level of slosh.

Reinforcement learning (RL) is an area of machine learning concerned with how intelligent agents ought to take actions in an environment in order to maximize the notion of cumulative reward. Reinforcement learning is one of three basic machine learning paradigms, alongside supervised learning and unsupervised learning.

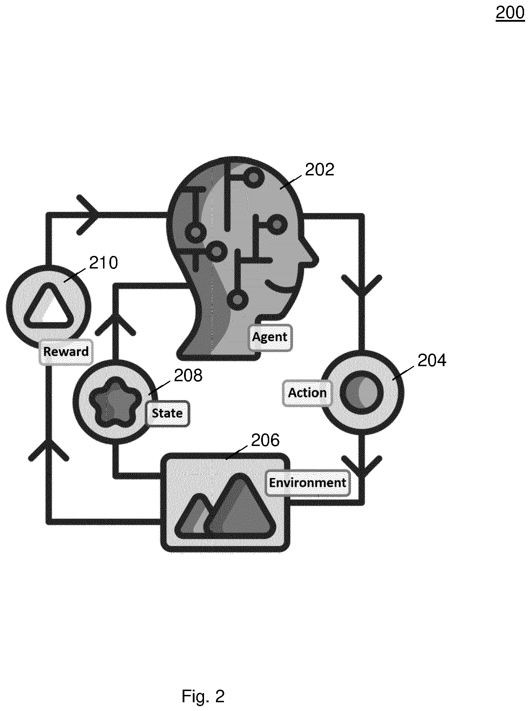

Figure 2 shows an illustration 200 of reinforcement learning, illustrating an agent 202, an action 204, an environment 206, a state 208, and a reward 210.

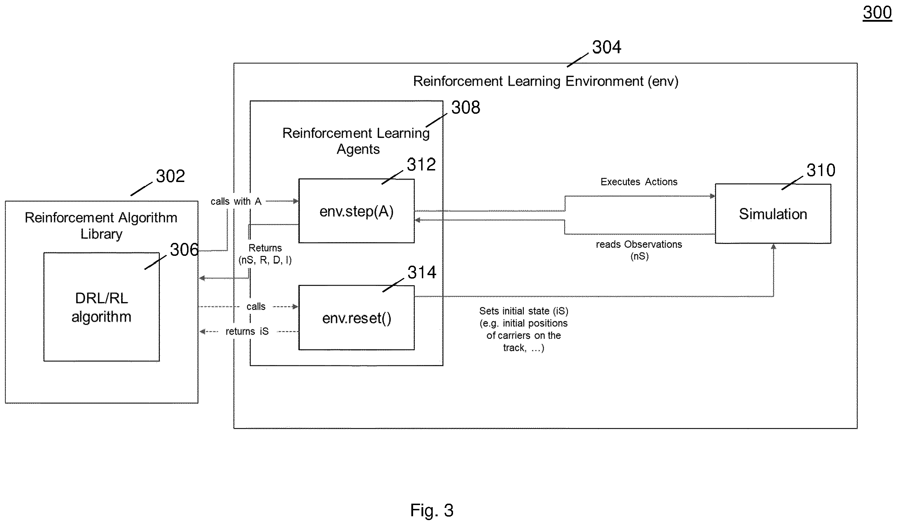

More details on the reinforcement learning according to various embodiments are provided in Figure 3 below.

Reinforcement learning may differ from supervised learning in not needing labelled input/output pairs be presented, and in not needing sub-optimal actions to be explicitly corrected. Instead, the focus of reinforcement learning may be on finding a balance between exploration (of uncharted territory) and exploitation (of current knowledge).

According to various embodiments, a commonly used RL method may be used, for example one of the following: A2C, A3C, DQN, Impala, MARWIL, PPO.

According to various embodiments, a slosh-reduction agent may be provided based on a RL method. The observations for the RL method may include one or more of the following: liquid viscosity, ambient temperature, container shape, container height, liquid fill level, segment limits (x, y, vel, acc), slosh-level. The actions for the RL method may include defining acceleration/deceleration segment position values (for example in the form of an array). The reward model for the RL method may include one or more of the following: information on whether the target position is reached; level of liquid remaining in the container (for example after the movement or during the movement), level of slosh (wherein a lower level is better), information on continuous segment limit passing, and a Y (in other words: lateral) distance between set position points.

According to various embodiments, a data-driven simulation may be provided to facilitate the reinforcement learning. The data-driven simulation may include steps of data collection, data preprocessing, model development, model validation, and simulation and analysis.

In the step of data collection, data that represents the behavior of the system or process that is to be simulated may be collected. This data may be obtained from various sources, including sensors, historical records, and other sources.

In the step of data preprocessing, once the data is collected, the data may be cleaned and processed to ensure that it is accurate and consistent. This step may involve removing any outliers, filling in missing values, and normalizing the data.

In the step of model development, a model may be developed based on the preprocessed data. There may be several types of models that can be used, including statistical models, machine learning models, and other types of models.

In the step of model validation, once the model is developed, the model may be validated to ensure that it accurately reflects the behavior of the system or process being simulated. This may involve comparing the model predictions with actual data to see how well the model performs.

In the step of simulation and analysis, the validated model may be used to simulate the behavior of the system or process under different conditions. This may help identifying potential problems or optimizing the system or process to improve performance.

Figure 3 shows an illustration 300 of reinforcement learning method (for example a learning architecture) according to various embodiments. In Figure 3, the following formulas and abbreviations are used: A may denote an action to take; iS may denote an initial state; nS may denote a new state; R may denote a reward; D may denote "Done" (for example a flag indicating that a task is complete); I may denote debug information. A reinforcement algorithm library 302 may include a DLR (deep reinforcement learning) / LR (reinforcement learning) algorithm 306. A reinforcement learning environment 304, which may be referred to as "env" may include reinforcement learning agents 308 and a simulation block 310. The reinforcement learning agents 308 may include a module 312 for executing a step (which may be referred to as env.step(A)), and a module 314 for executing a reset (which may be referred to as env.reset()). The reinforcement algorithm library 302 may call env.step(A) 312 with argument A. env.step(A) 312 may calculate R and D based on whatever is provided as nS. env.step(A) 312 may execute actions using simulation block 310, and env.step(A) may read observation (nS) from simulation block 310. env.step(A) 312 may return ns, R, D, and I to reinforcement algorithm library 302. The reinforcement algorithm library 302 may call env.reset() 314. env.reset() 314 may sets initial state (iS) (for example initial positions of carriers on the track) for the simulation module 310. env.reset() 314 may return iS to the reinforcement algorithm library 302.

Actions and observations may be specific to a motion application. Actions may be rather stable though, as actions are the parameters needed to generate a motion profile. An example of application-specific observations for a slosh-reduction agent are as follows:

Observations may include a viscosity of the liquid, an ambient temperature, a container shape, a container height, a liquid fill level, segment limits (for example x, y, vel, acc), and a slosh level.

Actions may include to define acceleration/deceleration-segment position-values (for example provided in an array).

A reward model may include a target position reached, a level of liquid remaining, a level of slosh (wherein the less the better), a continuous segment limit passing, and a y distance between set pos points.

According to various embodiments, training data and a simulation environment may be provided. A simulation engine may produce training data during simulation. The simulation engine may include a spline based interpolation engine to simulate the movement of the mechanics (for example including the container, and/or carrier, and/or flying knife), and to provide liquid behaviour simulation.

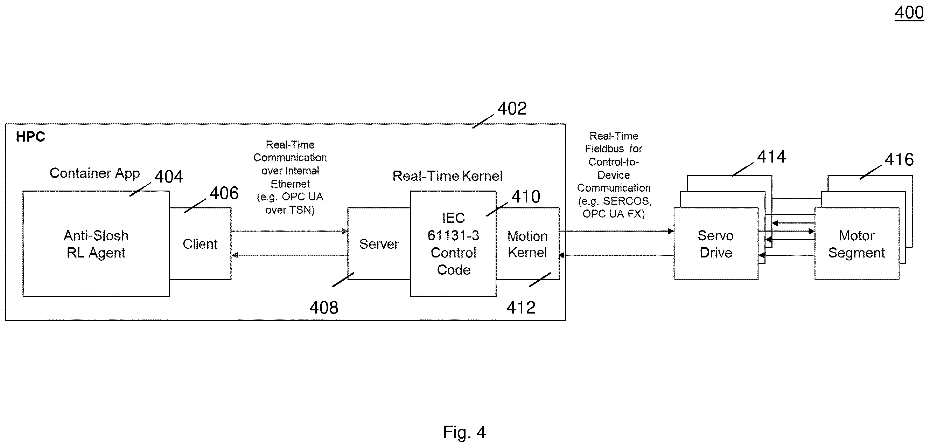

Figure 4 shows an illustration 400 of a control concept according to various embodiments. A HPC (high performance computing) module 402 may include an anti-slosh RL (reinforcement learning) agent 404 and a client 406, a server 408, a real-time kernel 410, and a motion kernel 412. The client 406 and the server 408 may communicate via real-time communication over Internal Ethernet (for example OPC UA over TSN) or via shared memory.

One or more servo drives 414 may be in communication with one or more motor segments 416.

The motion kernel 412 may communicate with the one or more servo drives 414 via Real-Time Fieldbus for Control-to-Device Communication (for example SERCOS, or OPC UA FX).

The HPC 402 may map the trained RL agent to the real world, may map observations from the real system to the internal data structures of the RL agent and may map actions from the RL agent to PLC (programmable logic controller) functions.

The anti-slosh agent 404 may encapsulate the trained RL agent, and alternatively may be replaced with another RL agent.

The client 406 may include a client part of the interface, and may send requests to the PLC (Server) to execute actions and to read observations.

The server 408 may include a server part of the interface, may take requests and may execute them, i.e. may perform the actions (calling internal PLC functions) and may provide requested parameter values.

The real-time kernel 410 may include a control application, for example written in IEC 61131-3 control code, and may be responsible for executing motion jobs (for example cam execution with interpolated segments and cam segments), may configure the cams with relevant data (for example acceleration, deceleration, maximum velocity, jerk, segment limits), may trigger job execution and read values from the real system.

The motion kernel 412 may, based on the entered motion job (for example cam job), calculate the motion profile and may send set-pos values via SERCOS to the servo drives 414. Based on the entered motion command (for example acceleration, deceleration, maximum velocity, jerk), the motion kernel 412 may calculate the motion profile and may send set-pos values via SERCOS to the servo drives 414.

According to various embodiments, synchronous motion control with segmented movement may be provided where on ore more segments give freedom on the motion definition in the segment. For example, an overall position of an axis in a product cycle may be segmented in synchronous movement parts and parts/segments that just needs the "definition" of the segment-limit conditions (start/end of segment conditions). The exact cam/curve/profile "how to meet" the segment limits may be AI generated. According to various embodiments, AI-segments may be provided in segmented cams.

The segmented cam with AI-cam-segments may be provided on a belt/transport system side (for example anti-slosh, which may be seen as kind of master), as well as on dependent mechanic side (for example flying knife).

Segmented cams may be provided on various machines, for example flying shear/knife, crank, anti-slosh, multicarrier (with synchronous path/position), transport systems (belts, multicarrier) with following (synchronized) mechanics (in other words: with constraints on dynamic movement/behavior of following-mechanic).

According to various embodiments, probabilistic solution may be provided for problems which are hardly (or not at all) describable analytically (for example anti-slosh problems), or where analytical solutions are only possible for selected subcases, or where analytical solutions are not available yet (for example anti-slosh movement around multicarrier-curved segments).

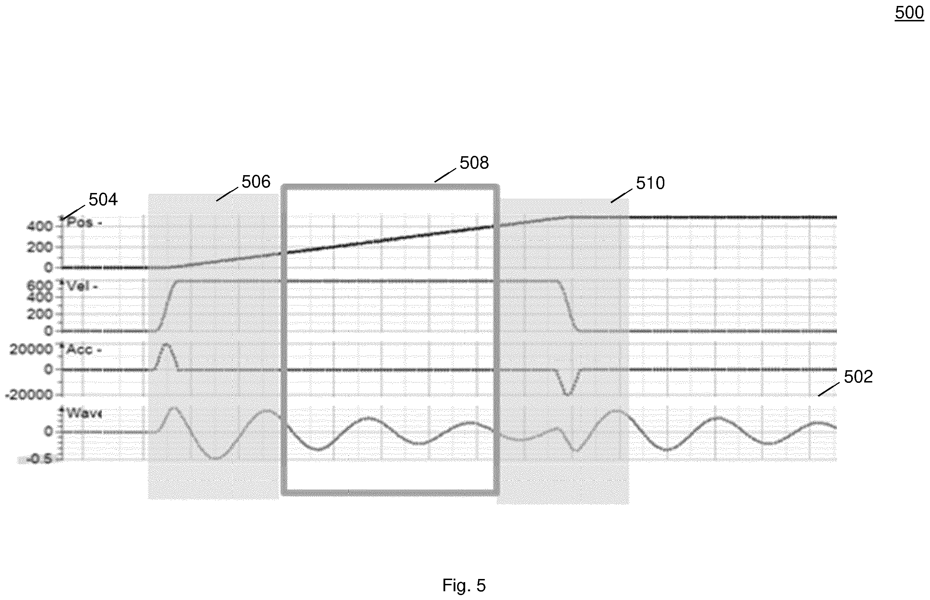

Figure 5 shows an illustration 500 of a segmented cam. A horizontal axis 502 may indicate time, and vertical axes 504 may indicate a position (for example of a container), velocity (for example of the container), acceleration (for example of the container), and wave (for example of a liquid in the container). A synchronous segment 508 may be provided between two less restricted segments 506 and 510. The synchronous segment may be a segment in which the transport system of the container is synchronous to another transport system, for example because a tool provided on the other transport system may manipulate the container while the container is moved using the transport system; accordingly, the motion profile of this segment may be determined based on a movement of the further transport system. The less restricted segments 506 and 510 may for example be acceleration or deceleration segments, and a motion profile for these segments may be determined based on a machine learning method (so that these segments may also be referred to as AI segments).

According to various embodiments, synchronous motion control with segmented movement systems with set-pos-chain coupling (following "slave" mechanic synchronized) may be provided. Dependent mechanics may define a movement for a complete "function/product cycle" (one, more, all segments of a segmented cam) even for non-velocity-constant movements. Synchronous "paths" may depend on mechanical constraints (acceleration/deceleration limits), on masses, on function type (e.g. handover of movable goods only in containers...) and may be provided as input parameter to the system.

Set-pos-chain may be understood as the concept in motion control how a master can operate several (for example more than 100) slave axis in position synchronous mode. One key aspect to achieve this may be to connect master position with slave position (as a machine may even have more than one master or other e.g. event triggered motion sub-systems). The firmware engine calculating the slave positions (which may be referred to as "motion kernel") may carry out cyclic checking this configuration of master-to-slave and cyclic calculating the slave positions according to the master position.

According to various embodiments, motion profiles for transport systems (for example belts, or multicarrier) with following (in other words: synchronized) mechanics (for example constraints on dynamic movement/behavior of following-mechanic) may be provided.

According to various embodiments, AI generated optimized/flexible motion profiles may be provided without the need for vel-constant synchro profiles (for example providing energy saving, faster returning to initial pos, and/ or machine speed optimization).

For example, three AI segments (synchronous acceleration, return, and wait to safe energy) may be provided.

According to various embodiments, motion control areas with low to none tight position coupling (or high tolerance on mechanical position) may be provided. For example, the function to fulfill may be the "transport" function itself. It may have no (or limited) mechanical coupling. The coupling may not be on highly synchronous movements but rather on "hand-over" points, work-stations or via sensor-based independent movements.

According to various embodiments, motion profiles may be provided for product belts transporting goods on "jam", outfeed belts, logistic systems, hoisting applications, or multicarrier applications (for example with stations as mechanical synchronization points).

According to various embodiments, multi-parameter optimization problems may be solved, for example based on time-to-target-position (for example minimal arrival time, in order to increase throughput), and/ or under constraints (for example mechanical, for example friction/jerk, or physical, for example slosh), or based on energy optimization of movements.

According to various embodiments, multiple variant problems (for example optimization under specific situation for one or more multi-parameter problems defined by the user) may be provided.

According to various embodiments, sustainability may be increased, for example by energy optimization, and/ or efficiency may be increased, for example by providing faster machine speeds, so that more products per minute (more throughput) may be provided. According to various embodiments, "Zero Engineering" may be provided: Analytically hardly describable problems may be solvable via probabilistic narrowing (for example using AI).

According to various embodiments, the machine learning method (in other words, the AI method) may be used in the control-loop on a realtime (RT) side of an implementation. The RL agent may be implemented on an RT side via driver for a RT system for an AI accelerator. Cyclic feedback (for example based on a fieldbus cycle) from a motion engine/RL agent and sensor feedback from a machine may be provided. This may provide minimized latency between AI and a motion kernel, so that for example life reaction on situations may be possible (for example instant cam on sensor based motion interruption or new set-pos-table). Furthermore, this may allow a fast switch on different agents/strategies (for example energy based or speed based), and/ or a fast reaction on product change / format change (for example related to different liquid recipes), which may be suitable for Industry 4.0 and/or Batch size 1.

According to various embodiments, an optimized movement around a bend (in other words curve), for example at a multicarrier system, may be provided. For example, an anti-slosh movement of a container with a liquid around a curve may be provided.

According to various embodiments, different types of definition of the motion profile may be provided, for example interpolated set-pos-arrays, or analytical function definitions (for example like in VDI2143), wherein the respective definition may be provided per AI-defined segment including selection of mathematical laws and appropriate configuration of the mathematical law.

The mathematical law may be the "real" definition of the motion of a slave axis. For example, a slave axis may be moving according to a cam. The cam may be a software-defined curve. Cam and motion profile may be used as synonyms.

A cam (in other words: motion profile) may be built by several segments of motion definitions (in other words: cam-segments). Each segment may be defined in the standard case with a mathematical law (for example as defined in VDI2143).

According to various embodiments, analytical functional definitions (for the motion profile) may be provided for example according to VD2143 laws or by another suitable function definition, for example by a polynomial (or piecewise polynomial or polynomial spline) of degree 7 (which may be referred to as Poly7).

According to various embodiments, motion profiles may be provided for segmented cams with cam-laws, or for positioning laws or position-based motion definition.

According to various embodiments, motion profiles may be determined for a smart infeed system which is a library for serial running infeed belts with functions and methods that help to realize a product infeed.

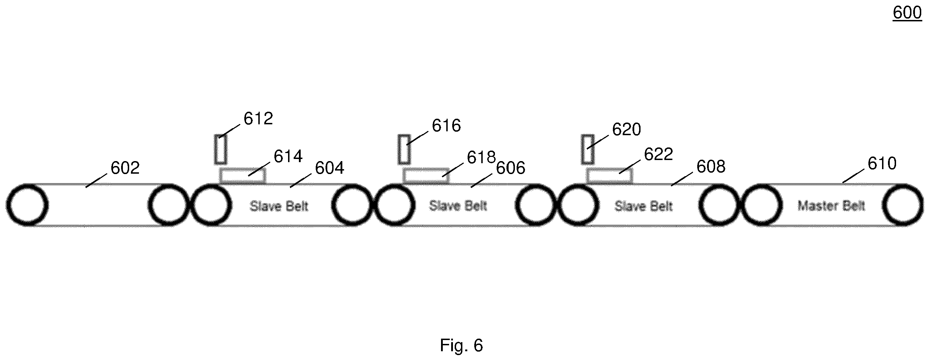

Figure 6 shows an illustration of an infeed system 600 with a first belt 602, a plurality of slave belts 604, 606, 608, and a master belt 610. A first sensor 612 may detect an item 614 on the first slave belt 604. A second sensor 616 may detect an item 618 on the second slave belt 606. A third sensor 620 may detect an item 622 on the third slave belt 608. The respective sensors 612, 616, 620 may determine the location of the items, and may correct their positions. For example, if an item is on a position further than expected, a negative correction may be provided. For example, if an item is on a position behind the expected position, a positive correction may be provided.

During normal operation (when no correction is necessary), all correction belts 604, 606, 608 (which may be referred to as CB or as slave belts) may run synchronously to the master belt 610 (which may be referred to as RB or as reception belt). A straight profile may be used for normal movement. A different motion profile, for example a non-straight profile, for example using a poly-5 motion profile (which may be a piecewise polynomial of degree 5, which may be referred to as a spline) may be used for correction. The belts may move synchronously when products are transferred from one belt to next one. No strictly synchronous motion is required when correction is made (for example, additional acceleration/-deceleration may be provided).

The correction needs to be finished before the next product arrive on the correction belt. A commonly known dwell-to-dwell motion profile for correction may be the 5th degree polynomial, also called the 5th order polynomial or 3-4-5 polynomial, which may be used with cam calculators and in the world of servo drives.

The 5th degree polynomial may have a balanced profile of characteristic values and may be described as a "decathlete" among the motion laws.

A positive correction may include higher speeds of the slave belt in order to move the item on the slave belt faster. A negative correction may include lower speeds of the slave belt in order to move the item on the slave belt slower. The positive correction or negative correction may be provided as a RL-controlled correction using a poly-5 motion profile.

Assuming that the master belt's displacement is $y_m$, with a velocity of $v_m$ and a correction belt's displacement of $y_c$, the following equations hold:

$$y_c = y_m + error = y_m + (a_0 + a_1 y_m + a_2 y_m^2 + a_3 y_m^3 + a_4 y_m^4 + a_5 y_m^5) = a_0 + a_1' y_m + a_2 y_m^2 + a_3 y_m^3 + a_4 y_m^4 + a_5 y_m^5$$

$$displacement = a_0 + a_1' y_m + a_2 y_m^2 + a_3 y_m^3 + a_4 y_m^4 + a_5 y_m^5 = a_0 + a_1' v_m t + a_2 v_m^2 t^2 + a_3 v_m^3 t^3 + a_4 v_m^4 t^4 + a_5 v_m^5 t^5$$

$$velocity = a_1' v_m + 2a_2 v_m y_m + 3a_3 v_m y_m^2 + 4a_4 v_m y_m^3 + 5a_5 v_m y_m^4 = a_1' v_m + 2a_2 v_m^2 t + 3a_3 v_m^3 t^2 + 4a_4 v_m^4 t^3 + 5a_5 v_m^5 t^4$$

$$acceleration = 2a_2 v_m^2 + 6a_3 v_m^2 y_m + 12a_4 v_m^2 y_m^2 + 20a_5 v_m^2 y_m^3 = 2a_2 v_m^2 + 6a_3 v_m^3 t + 12a_4 v_m^4 t^2 + 20a_5 v_m^5 t^3$$

The following constraints may hold true:

- Initial position and velocity of CB: $displacement_{t=0} = 0$, $velocity_{t=0} = v_r$ which leads to $a_0 = 0$, $a_1' = 1$ .
- End position and velocity of CB: $displacement_{t=T} = c$, $velocity_{t=T} = v_r$ where c is defined as the maximum displacement during correction.
- 4 constraints:, $vel_{min} \leq velocity \leq vel_{max}$, $acc_{min} \leq acceleration \leq acc_{max}$, wherein these limits may be given by a user's configuration.

Based on the above, there are 6 parameters and 4 equations, which in the end leads to 2D action space.

By defining the appropriate reward function, the best coefficients may be found.

Since $a_0 = 0$, $a_1' = 1$, the following may hold true:

$$displacement = v_m t + a_2 v_m^2 t^2 + a_3 v_m^3 t^3 + a_4 v_m^4 t^4 + a_5 v_m^5 t^5$$

$$velocity = v_m + 2a_2 v_m^2 t + 3a_3 v_m^3 t^2 + 4a_4 v_m^4 t^3 + 5a_5 v_m^5 t^4$$

$$acceleration = 2a_2 v_m{}^2 + 6a_3 v_m{}^3 t + 12a_4 v_m{}^4 t^2 + 20a_5 v_m{}^5 t^3$$

When the correction is finished, the following may hold true:

$$v_m T = c - error \xrightarrow{\text{yields}} T = \frac{c - error}{v_m}$$

$$a_2 v_m{}^2 T^2 + a_3 v_m{}^3 T^3 + a_4 v_m{}^4 T^4 + a_5 v_m{}^5 T^5 = error \xrightarrow{\text{yields}} a_2 + a_3 v_m T + a_4 v_m{}^2 T^2 + a_5 v_m{}^3 T^3 = error$$

$$2a_2 v_m{}^2 T + 3a_3 v_m{}^3 T^2 + 4a_4 v_m{}^4 T^3 + 5a_5 v_m{}^5 T^4 = 0 \xrightarrow{\text{yields}} 2a_2 + 3a_3 v_m T + 4a_4 v_m{}^2 T^2 + 5a_5 v_m{}^3 T^3 = 0$$

Assuming that $[a_2, a_3]$ is the 2D action generated by the agent, the following relationship may be obtained:

$$a_4 = \frac{5error - 3a_2(c - error)^2 - 2a_3(c - error)^3}{(c - error)^4}, \qquad a_5 = \frac{-4error + 2a_2(c - error)^2 + a_3(c - error)^3}{(c - error)^5}$$

In the following, reinforcement learning in the smart infeed system according to various embodiments will be described.

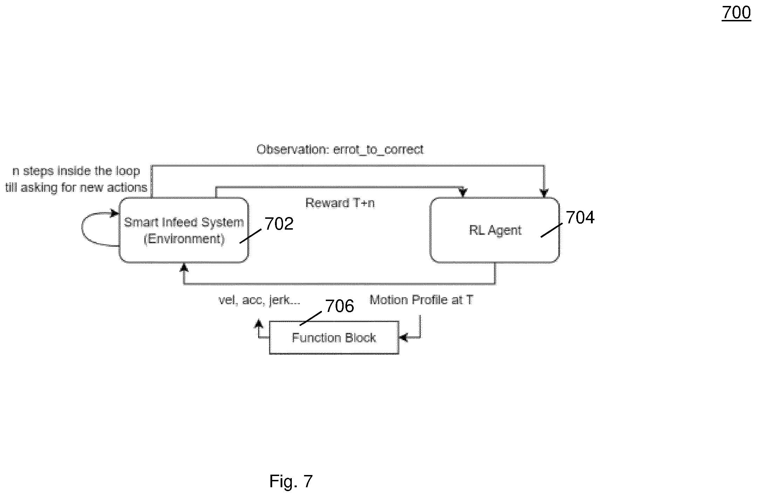

Figure 7 shows an illustration 700 of the reinforcement learning system according to various embodiments. A smart infeed system 702, a RL agent 704, and a function block 706 may be provided. T may indicate a time step.

There may be only one function block (FB) 706 which has control over all correction belts, which corresponds to a single-agent in the RL simulation. Alternatively, multi-agent reinforcement may be provided and a mapping to real PLC hardware may be provided.

"Mapping" is referring to the possibility to have more than one agent and the definition of a relation of every agent and its subsystem it is responsible to control.

There may be no mathematical mapping. In case of multi-agent reinforcement learning, there may still be a single function block that interacts with the AI (artificial intelligence) side. However, on the AI side, there may be multiple agents that can generate actions. These actions may then be combined according to a predefined policy (for example, the individual agents may then be responsible for a disjoint set of actions). The environment and state/observation may the same for all agents.

According to various embodiments, the following fixed poly-5 MP (motion profile) may be used in the smart infeed system may be as follows:

$$y_c = y_m + error = y_m + (10 y_m{}^3 - 15 y_m{}^4 + 6 y_m{}^5)$$

If a CB does not ask for action, it may move as (in other words: synchronously to) the master belt. If a CB asks for action, motion profiles may be generated.

If the following requirements are fulfilled, then a new action may be generated: a new product (in other words: an item) is detected by the sensor, and there is no existing MP to correct the error of this product.

Table 1 shows details on the state according to various embodiments. A discrete state space may be provided.

**Table 1. State**

| | State |
|---|---|
| ⊟ | |
| AskForAction: [Boolean * num_belts] | |
| If CB not ask for action, move as master belt | |
| If CB ask for action, generate motion profiles | |

If the following requirements are fulfilled, then a new action may be taken: A new product is detected by the sensor; and there is no existing MP (motion profile) to correct the error of this product.

Table 2 shows details on the action according to various embodiments. There may be six parameters ($a_0$, $a_1$, $a_2$,

$a_3$, $a_4$, $a_5$) within the poly-5 MP of correction belt, which define an error:

$$error = a_0 + a_1x + a_2x^2 + a_3x^3 + a_4x^4 a_5x^5.$$

$a_0$ and $a_1$ may be derived from two constraints, and RL may be used to compute the remaining parameters $a_2$, $a_3$, $a_4$ and $a_5$. Velocity, acceleration, and jerk may then be derived from this motion profile to control the correction belts.

**Table 2. Action**

|  | Action |
|---|---|
| A array of shape (1, 2): [a2, a3] Derive a4, a5 from existing constraints These 4 parameters define poly-5 MP | |

Table 3 shows details on the reward according to various embodiments. The reward is updated when a product is detected, and then it is asked for new actions to generate the MP for this product.

**Table 3. Reward**

|  | **Reward** |
|---|---|
| Error: + for low error bias, vice verse Velocity: + for low velocity bias, vice verse Counter: + for throughputs, - for collisions Limit: - if maxlm in vel, acc are exceeded | |

Table 4 shows details on the observation according to various embodiments. There may be no constraint on jerk, so there may not be a need to create observations for that. The parameter c may be used to indicate that the correction should only happen within this distance. For any movement beyond this distance c, the product should move synchronously with the master belt.

**Table 4. Observation**

|  | **Observation** |
|---|---|
| Kinematic: normal velocity Product, error to correct System; c (max displacement for correction) | |

There may be 6 parameters within the poly-5 MP of correction belt:

$$error = a_0 + a_1x + a_2x^2 + a_3x^3 + a_4x^4 + a_5x^5$$

$a_0$, $a_1$ may be derived from 2 constraints, and RL may be used to determine 4 parameters. Velocity, acceleration, jerk may then be derived from this motion profile to control correction belts.

When a new product is detected, the system may ask for new actions to generate the MP for this product and may also return the reward for previous action. It will be understood that this action and reward update may be not synchronized with the system update, so that a : multi-step learning may be provided.

There may be no constraint on jerk, so that it may not be necessary to create observations for jerk.

According to various embodiments, a dense reward may be provided. For example, an error corrected at the end of the MP may be used as a reward: $reward_{pos} = 5 - pos_{bias}$. For example, a velocity at the end of the MP may be used as a reward: $reward_{vel} = 10 - |vel_{end} - vel_{master}|$.

The end velocity may or may not be the same as master velocity, while the error doesn't have to be corrected completely in one correction belt.

According to various embodiments, sparse rewards may be provided as indicated in Table 5.

**Table 5. Sparse rewards**

| Events | Reward |
|---|---|
| Velocity Bias < 100 | +5 |
| Velocity Bias < 50 | +10 |
| Velocity Bias < 10 | +20 |
| Velocity Bias < 5 | +30 |
| Error Bias < 20 | +10 |
| Error Bias < 10 | +15 |
| Error Bias < 5 | +20 |
| product within finger | +10 |
| product collision | -20 |
| vel/acc exceed max | -20 |
| vel/acc below min | -30 |
| backward movement | -50 |
| valid move/vel/acc | +5 |
| each step before truncation | +0.2 |

In Table 5, "product within finger" is related to smart infeed systems, where products are sent to reception belts, and wherein for example the distance the distance between each product is equal. Fingers are the baffles in reception belts which partition the reception belt into compartments.

Truncation in RL may refer to that certain boundary condition is reached, hence the current training may not be continued anymore; examples are time limit, or a robot going out of bounds.

In case two products are very close to each other, the truncation probability may be higher and the agent may be restarted.

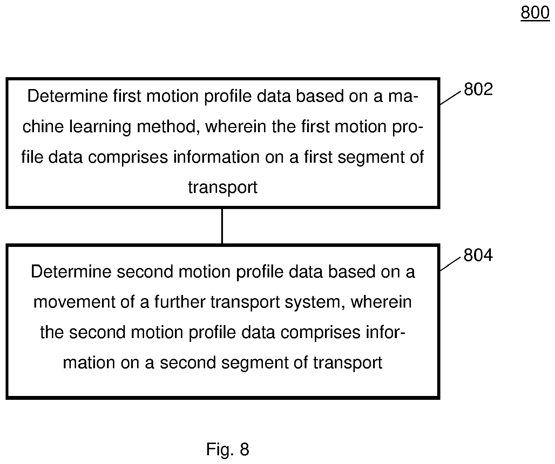

Fig. 8 shows a flow diagram 800 illustrating a method for determining motion profile data for a transport system according to various embodiments. At 802, first motion profile data may be determined based on a machine learning method, wherein the first motion profile data includes or is information on a first segment of transport. At 804, second motion profile data may be determined based on a movement of a further transport system, wherein the second motion profile data includes or is information on a second segment of transport.

According to various embodiments, the second motion profile data may be determined so that the transport system moves in line with the further transport system.

According to various embodiments, the second motion profile data may be determined so that a handover of an item carried by the further transport system is provided to the transport system.

According to various embodiments, the first motion profile data and/ or the second motion profile data may be defined using a spline.

According to various embodiments, the first motion profile data and/ or the second motion profile data may be defined using an array of positions.

According to various embodiments, the first motion profile data may be determined based on minimizing a time.

According to various embodiments, the first motion profile data may be determined based on minimizing an energy consumption.

According to various embodiments, the first motion profile data may be determined based on minimizing slosh of a liquid provided in a container to be transported by the transport system.

According to various embodiments, the first motion profile data may provide (or describe or represent) at least one of an acceleration, a deceleration, or a return to a pre-determined position.

According to various embodiments, the further transport system may be configured to move a tool to manipulate an item carried by the transport system

According to various embodiments, the tool may include or may be at least one of a printer, a knife, or a tool to add a further item to the item.

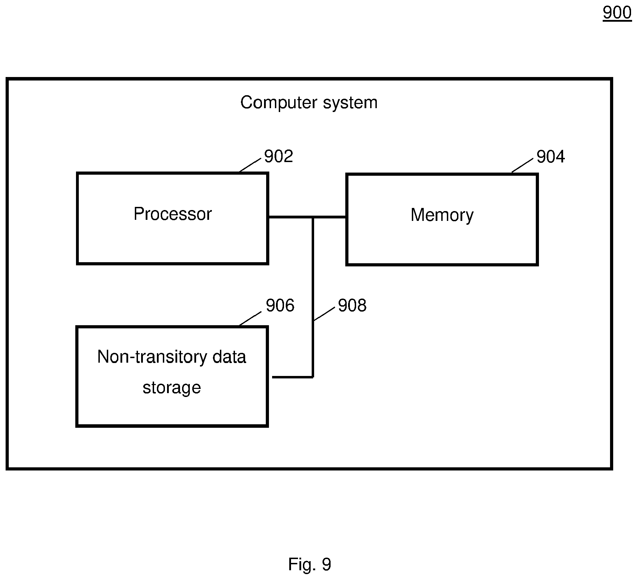

Fig. 9 shows a computer system 900 with a plurality of computer hardware components configured to carry out steps of a computer implemented method for determining motion profile data for a transport system according to various embodiments. The computer system 900 may include a processor 902, a memory 904, and a non-transitory data storage 906.

The processor 902 may carry out instructions provided in the memory 904. The non-transitory data storage 906 may store a computer program, including the instructions that may be transferred to the memory 904 and then executed by the processor 902.

The processor 902, the memory 904, and the non-transitory data storage 906 may be coupled with each other, e.g. via an electrical connection 908, such as e.g. a cable or a computer bus or via any other suitable electrical connection to exchange electrical signals.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 900.

According to various embodiments, an AI supported motion profile definition may be provided for (at least partially) fully synchronized motion in the area of general motion control. AI in the loop may be provided for motion control on the non-RT side. AI in the loop may be provided for motion control on the RT side.

According to various embodiments, machines may be optimized, for example to increase sustainability (for example by energy optimization), and/ or efficiency (for example by faster machine speeds), may provide "Zero Engineering", and may provide AI for motion control.

According to various embodiments, high performance computing (HPC) with equipped AI accelerator and AI software on GPOS part may be used.

GPOS stands for "General Purpose operating system" and may for example be a Linux/Windows Operating systems. It differentiates for RTOS (Realtime operating system) by not having means in place (e.g. scheduler, task/thread definition) that utilizes the CPU resources best and in a way that it "enables/guarantees" the execution and timing of a part of its Firmware/software.

It will be understood that realtime does not make guarantees on execution. But it may optimize the execution and may have supervision on place to monitor severe deviations (execution timing violated) and reacts to it appropriately.

Features described in this specification and/or in the claims and/or shown in a figure shall be deemed combinable with and amongst each other also if their combination is not expressly described, to the extent that the combination is technically feasible. Features described in a certain context, embodiment, figure or claim shall be deemed separable from this claim, context, embodiment or figure and shall be deemed combinable with every other figure, claim, context or embodiment, to the extent that it is technically feasible. Embodiments and figures shall not be understood as being meant necessarily exclusive against each other. Features described as part of an embodiment or a figure shall be deemed separable from this embodiment or figure and shall be deemed combinable with features of other embodiments or figures, as far as technically possible. Descriptions of a method or procedure or a method step or a procedural step shall be understood also as a description of means for implementing the method or procedure or method step or procedural step and/or shall possibly also be understood as a description of an artefact made or modified by said method or procedure or method step or procedural step and/or shall possibly also be understood as a description of a data carrier holding program instructions of executable code adapted for implementing the method or procedure or method step or procedural step, and vice versa. In the present specification, references to the "invention" address the teaching as subjectively conceived by the inventors.

<u>List of reference numerals</u>

| | |
|---|---|
| 100 | transport system arrangement |
| 102 | transport system |
| 104 | first axis |
| 106 | plurality of items |
| 108 | further transport system |
| 110 | second axis |
| 112 | endless feed |
| 114 | logical encoder |
| 116 | coordinate system |
| | |
| 200 | illustration of reinforcement learning |
| 202 | agent |

| 204 | action |
| 206 | environment |
| 208 | state |
| 210 | reward |
| | |
| 300 | illustration of reinforcement learning method |
| 302 | reinforcement algorithm library |
| 304 | reinforcement learning environment |
| 306 | DLR/ LR algorithm |
| 308 | reinforcement learning agents |
| 310 | simulation block |
| 312 | module for executing a step |
| 314 | module for executing a reset |
| | |
| 400 | illustration of a control concept according to various embodiments |
| 402 | HPC module |
| 404 | anti-slosh RL agent |
| 406 | client |
| 408 | server |
| 410 | real-time kernel |
| 412 | motion kernel |
| 414 | one or more servo drives |
| 416 | one or more motor segments |
| | |
| 500 | illustration of a segmented cam |
| 502 | horizontal axis |
| 504 | vertical axes |
| 506 | less restricted segment |
| 508 | synchronous segment |
| 510 | less restricted segment |
| | |
| 600 | infeed system |
| 602 | first belt |
| 604 | first slave belt |
| 606 | second slave belt |
| 608 | third slave belt |
| 610 | master belt |
| 612 | first sensor |
| 614 | item on the first slave belt |
| 616 | second sensor |
| 618 | item on the second slave belt |
| 620 | third sensor |
| 622 | item on the third slave belt |
| | |
| 700 | illustration of the reinforcement learning system according to various embodiments |
| 702 | smart infeed system |
| 704 | RL agent |
| 706 | function block |
| | |
| 800 | flow diagram illustrating a method for determining motion profile data for a transport system according to various embodiments |
| 802 | step of determining first motion profile data based on a machine learning method, wherein the first motion profile data includes or is information on a first segment of transport |
| 804 | step of determining second motion profile data based on a movement of a further transport system, wherein the second motion profile data includes or is information on a second segment of transport |
| | |
| 900 | computer system according to various embodiments |
| 902 | processor |

904    memory
906    non-transitory data storage
908    connection

**Claims**

1. Method for determining motion profile data for a transport system,
   the method comprising:

   determining (802) first motion profile data based on a machine learning method, wherein the first motion profile data comprises information on a first segment of transport; and
   determining (804) second motion profile data based on a movement of a further transport system, wherein the second motion profile data comprises information on a second segment of transport.

2. The method of claim 1,
   wherein the second motion profile data is determined so that the transport system moves in line with the further transport system.

3. The method of any one of the preceding claims,
   wherein the second motion profile data is determined so that a handover of an item carried by the further transport system is provided to the transport system.

4. The method of any one of the preceding claims,
   wherein the first motion profile data and/ or the second motion profile data is defined using a spline.

5. The method of any one of the preceding claims,
   wherein the first motion profile data and/ or the second motion profile data is defined using an array of positions.

6. The method of any one of the preceding claims,
   wherein the first motion profile data is determined based on minimizing a time.

7. The method of any one of the preceding claims,
   wherein the first motion profile data is determined based on minimizing an energy consumption.

8. The method of any one of the preceding claims,
   wherein the first motion profile data is determined based on minimizing slosh of a liquid provided in a container to be transported by the transport system.

9. The method of any one of the preceding claims,
   wherein the first motion profile data provides at least one of an acceleration, a deceleration, or a return to a pre-determined position.

10. The method of any one of the preceding claims,
    wherein the further transport system is configured to move a tool to manipulate an item carried by the transport system.

11. The method of claim 10,
    wherein the tool comprises at least one of a printer, a knife, or a tool to add a further item to the item.

12. Non-transitory computer-readable medium comprising instructions which, when executed by a computing system, make the computing system carry out the method of any one of claims 1 to 11.

13. Data processing apparatus configured to carry out the method of any one of claims 1 to 11.

14. Transport system, comprising a control unit configured to determine a motion profile data for the control system based on the method of any one of claims 1 to 11.

15. The transport system of claim 14, wherein the transport system is configured as a multicarrier system.

100

Fig. 1

200

Fig. 2

Fig. 3

Fig. 4

Fig. 5

EP 4 607 302 A1

Fig. 6

Observation: errot_to_correct

n steps inside the loop
till asking for new actions

Reward T+n

Smart Infeed System
(Environment) 702

RL Agent 704

vel, acc, jerk... 706    Motion Profile at T

Function Block

Fig. 7

EP 4 607 302 A1

<u>800</u>

| Determine first motion profile data based on a machine learning method, wherein the first motion profile data comprises information on a first segment of transport | 802 |

| Determine second motion profile data based on a movement of a further transport system, wherein the second motion profile data comprises information on a second segment of transport | 804 |

Fig. 8

900

Computer system

Processor
/902

Memory
/904

Non-transitory data storage
/906

/908

Fig. 9

# EUROPEAN SEARCH REPORT

**Application Number**

EP 24 30 5289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/159279 A1 (DOLGOVYKH ANTON [CA] ET AL) 25 May 2023 (2023-05-25) * paragraph [0049] - paragraph [0083] * | 1-15 | INV. G05B19/414 G05B19/418 |
| A | US 2018/136623 A1 (MATTIL DIRK [DE] ET AL) 17 May 2018 (2018-05-17) * paragraph [0081] - paragraph [0110] * | 1-15 | |
| A | MORIELLO LORENZO ET AL: "Control of liquid handling robotic systems: A feed-forward approach to suppress sloshing", 2017 IEEE INTERNATIONAL CONFERENCE ON ROBOTICS AND AUTOMATION (ICRA), IEEE, 29 May 2017 (2017-05-29), pages 4286-4291, XP033127235, DOI: 10.1109/ICRA.2017.7989493 [retrieved on 2017-07-21] * the whole document * | 1-15 | |
| A | US 2023/365000 A1 (HOFMANN STEFFEN [DE] ET AL) 16 November 2023 (2023-11-16) * paragraph [0040] - paragraph [0054] * | 1-15 | **TECHNICAL FIELDS SEARCHED (IPC)** G05B B65G G06N |

The present search report has been drawn up for all claims

| Place of search | Date of completion of the search | Examiner |
|---|---|---|
| The Hague | 29 July 2024 | Ciric, George |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5289

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2024

| Patent document cited in search report | Publication date | Patent family member(s) | | Publication date |
|---|---|---|---|---|
| US 2023159279 A1 | 25-05-2023 | US | 2023159279 A1 | 25-05-2023 |
| | | US | 2023161328 A1 | 25-05-2023 |
| US 2018136623 A1 | 17-05-2018 | CN | 108073130 A | 25-05-2018 |
| | | EP | 3321754 A1 | 16-05-2018 |
| | | US | 2018136623 A1 | 17-05-2018 |
| US 2023365000 A1 | 16-11-2023 | CN | 117023158 A | 10-11-2023 |
| | | EP | 4275942 A1 | 15-11-2023 |
| | | US | 2023365000 A1 | 16-11-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102021128280 A1

- WO 2019238277 A1

### Non-patent literature cited in the description

- **J. WANG et al.** Multi-Agent Reinforcement Learning for Active Voltage Control on Power Distribution Networks. *arXiv:2110.14300*